# EUROPEAN PATENT SPECIFICATION

(11) **EP 2 450 248 B1**
(45) Date of publication and mention of the grant of the patent: **05.08.2020**
(21) Application number: 12152337.7
(22) Date of filing: 03.06.2009
(51) Int. Cl.: B60T 8/88, B60T 13/66, B60T 17/22, B60T 7/04, B60T 7/20, B60T 8/17, B60T 13/68, B60T 8/32

(54) **Vehicle Braking System**
Fahrzeugbremssystem
Système de freinage de véhicule

(30) Priority: 19.07.2008 GB 0813262
(43) Date of publication of application: 09.05.2012
(62) Divisional of application: 09784595.2
(73) Proprietor: Haldex Brake Products AB, 261 24 Landskrona (SE)
(72) Inventor: Harrison, Dudley, John, Solihull, West Midlands B90 4YP (GB)
(74) Representative: Johnson, Emma Elizabeth

(56) References cited:
- EP-A1- 1 717 121
- EP-A1- 2 060 457
- US-A1- 2003 195 668
- US-A1- 2005 040 701

## Description

The present invention relates to a vehicle braking system, particularly but not exclusively to a braking system for an articulated heavy goods vehicle.

In articulated vehicles including a tractor and a full trailer or semi-trailer, where braking is controlled using an electronic braking system (EBS), it is known to provide the tractor with an electronic control unit (ECU) to control braking of the tractor, and the trailer with a separate electronic control unit to control braking of the trailer. An electronic braking demand signal generated by a driver of the vehicle, for example by actuating a foot pedal, is transmitted to the tractor ECU which determines the required braking force, and transmits appropriate braking signals to brake actuators provided for the wheels of the tractor. The tractor ECU also transmits the braking demand signal to the trailer ECU to enable the trailer ECU to transmit appropriate braking signals to the brake actuators provided for the wheels of the trailer.

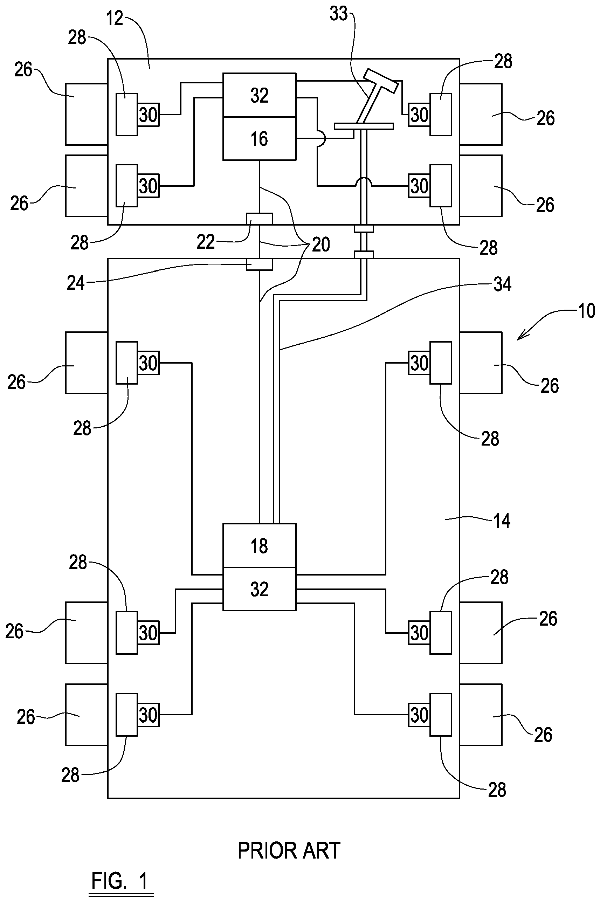

Data transfer between the tractor ECU 16 and the trailer ECU 18 is typically facilitated by means of a CAN bus 20 which is required to comply with the standards of ISO11992. As illustrated in Figure 1, the CAN bus 20 extends from the tractor ECU 16 to a connector 22 provided at the rear of the tractor 12, to a corresponding connector 24 provided at the front of the trailer 14, and finally to the trailer ECU 18. In order to comply with the requirements of ISO11992, the total length of the CAN bus 20 must not be more than 40m, of which no more than 15m is permitted to extend between the tractor ECU 16 and the tractor-mounted connector 22, no more than 7 meters is permitted to extend between the two connectors 22, 24, and no more than 18m is permitted to extend between the trailer-mounted connector 24 and the trailer ECU 18.

These constraints are acceptable in most vehicles, but not where the trailer is extendable. It is known to provide trailers which can be extended to up to 50m in length, and in such vehicles, the 18m of CAN bus between the trailer connector 24 and the trailer ECU 18 cannot accommodate the extension of the trailer. This problem can be overcome by disconnecting the CAN bus between the trailer connector 24 and the trailer ECU 18 and operating the trailer brakes using a replacement / back-up pneumatic system. The problem with this is that, when a trailer is extended for example to 40-50m in length, the delay in transmitting a pneumatic signal along the entire length of the trailer can result in significant delay in the application of the trailer brakes compared to when the electronic braking system is used.

US2003/0195668 discloses a method for exchanging data in a vehicle train having a tractor and one or more trailers coupled to the tractor by means of a PLC data bus.

US2005/040701 discloses a tractor-trailer communication system which enables a status of a vehicle subsystem positioned on one or more trailers to be communicated to the tractor. A command for controlling a subsystem on a trailer can also be communicated from the tractor to the trailer over the power bus.

EP1717121 discloses a vehicle power and communication bus for a tractor-trailer vehicle. The electrical power and communication bus is provided in an ABS module.

EP2060457 discloses a brake control module which enables communication between a tractor, a first trailer and a second trailer.

According to the invention we provide an articulated vehicle according to claim 1.

Advantageously, the first trailer is a dolly and the second trailer is a semi-trailer.

Preferably, the electrical connector is connected to each of the electrical braking control units by means of a bus.

An embodiment of the invention will now be described with reference to the accompanying drawings of which
FIGURE 1 is a schematic illustration of a prior art vehicle braking system;
FIGURE 2 is a schematic illustration of a vehicle braking system not forming part of the present invention; and
FIGURE 3 is a schematic illustration of a configuration of a vehicle braking system according to the invention.

Referring to Figure 1, there is shown an articulated vehicle 10 fitted with a prior art braking system. The vehicle 10 includes a tractor 12 and a trailer 14, the tractor 12 having a main braking electronic control unit (ECU) 16 and the trailer 16 having a main braking electronic control unit (ECU) 18, the two ECUs being connected together by means of a CAN bus 20 and a tractor connector 22 mounted on the rear of the tractor 12 and a trailer connector 24 mounted on the front of the trailer 14. The tractor 12 and trailer 14 are each provided with a plurality of wheels 26 each of which is provided with a brake 28 which is operated by an actuator 30. In this example, the actuators 30 are pneumatically operable, and are therefore connected to a source of pressurised fluid (in this example compressed air) via a modulator 32. Each modulator 32 is electrically operable and receives an electrical signal input from one of the ECUs 16, 18 so that it may control the flow of compressed air to the brake actuators associated with the wheels 26 at one side of the tractor or trailer respectively in response to an electrical braking signal from the respective ECU 16, 18.

The CAN bus 20 is ISO11992 compliant, and the two connectors 22, 24 are standard tractor-trailer connectors which, in this example, fall within the scope of ISO7638. As such, the portion of the CAN bus 20 which extends between the tractor ECU 16 and the tractor-mounted connector 22 is no more than 15m long, the portion of the CAN bus 20 which extends between the tractor-mounted connector 22 and the trailer-mounted connector 24 is no more than 7 long, whilst the portion of the CAN bus which extends between the trailer connector 24 and the trailer ECU 18 is no more than 18m long.

The braking system is operable as follows. A driver of the vehicle 10 generates an electrical braking demand signal, for example by operating a brake pedal 33, and this braking demand signal is transmitted to the tractor ECU 16. The tractor ECU 16 determines the braking force required to be applied to the tractor 12 to achieve the desired braking, and transmits appropriate braking signals to each of the modulators 32 mounted on the tractor 12. The tractor ECU 16 also transmits the braking demand signal along the CAN bus 20 to the trailer ECU 18, and the trailer ECU 18 determines the braking force required to be applied to the trailer brakes to achieve the desired braking, and transmits appropriate braking signals to each of the modulators 32 mounted on the trailer 14.

The system is also provided with a pneumatic back-up to enable braking of the trailer in the absence of an electrical braking demand signal from the tractor 12, for example because of an electrical power failure in the tractor 12, because there is a fault in the CAN bus 20 or the connectors 22, 24, or because the tractor EBS is incompatible with the trailer EBS. Operation of the brake pedal also generates a pneumatic braking demand signal which is transmitted along a pneumatic line 34 from the tractor to a pressure input in the trailer ECU 18. The trailer ECU 18 is provided with a pressure transducer which measures the pressure of the pneumatic braking demand signal, and converts it to an electrical braking demand signal, which it then uses to generate appropriate braking signals for transmission to the modulators 32.

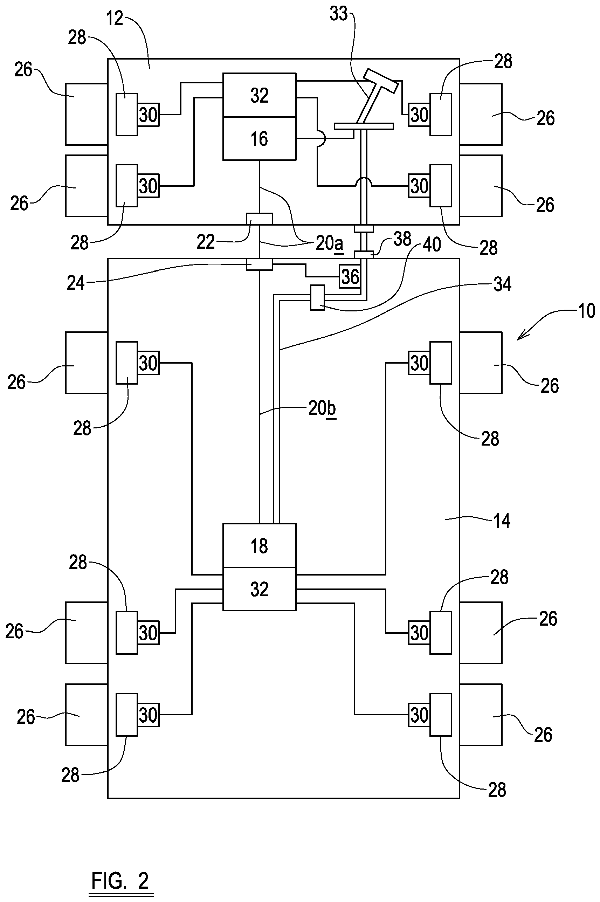

As already mentioned above, the operation and components of the braking system as described above are all entirely conventional, and the invention lies in aspects of the braking system described below and shown in Figure 2, in particular relating to the CAN bus connection between the two ECUs 16, 18.

Referring to Figure 2, there is shown a schematic illustration of a vehicle 10 having a braking system which is identical to the braking system shown in Figure 1, but instead of being a conventional ISO7638 connector, which acts as a simple junction box, the trailer-mounted connector 24 is a CAN repeater which retransmits any signals received. Since the repeater is therefore the originator of any signal it transmits, the system is now considered to be provided with two CAN buses - the first 20a extending between the tractor ECU 16 and the trailer-mounted connector 24, and the second 20b extending between the trailer-mounted connector 24 and the trailer ECU 18, both of which can be up to 40m long. By virtue of the replacement of the ISO7638 trailer connector with a CAN repeater, electrical control of braking can be maintained even if the system is used on a fully extended extendable trailer.

It should be appreciated that whilst in this example the ISO7638 connector has been replaced by the CAN repeater, the CAN repeater may be provided in addition to the connector 24.

The trailer 14 is also provided with a headboard pressure sensor 36 which measures the pressure in the pneumatic line 34 as close to the front of the trailer (the trailer headboard) as possible. In this example, the headboard pressure sensor 36 is mounted in the pneumatic line 34 between a trailer coupling 38, by means of which the pneumatic line from the tractor 12 is coupled to the trailer 14, and a relay valve 40 which acts to boost the braking demand signal transmitted to the trailer ECU 18. The headboard pressure sensor 36 generates an electrical signal which is indicative of the pressure in the pneumatic line 34, and which therefore constitutes a replacement electrical braking demand signal. The headboard pressure sensor 36 is connected to an electrical input of the CAN repeater forming the trailer-mounted connector 24 and the CAN repeater configured such that the replacement electrical braking demand signal from the pressure sensor 36 can be transmitted to the trailer ECU 18 via the second CAN bus 20b.

The trailer ECU 18 can then treat the electrical braking demand signal generated by the headboard pressure sensor 36 as if it were an electrical braking demand signal transmitted from the tractor 12, and generate the braking signals for transmission to the modulators 32 on the basis of this electrical braking demand signal rather than on the basis of the electrical signal derived from the pneumatic braking demand signal received by the trailer ECU 18 via the pneumatic line 34.

The provision of such a headboard pressure sensor 36 is particularly advantageous because the braking demand signal can be transmitted very quickly to the trailer ECU 18 via the second CAN bus 20b, and without the need to provide any additional wiring. This overcomes the problem of delay in operation of the trailer brakes caused by the length of time the pneumatic braking demand signal takes to travel along the pneumatic line 34 to the trailer ECU 18, particular if the trailer 14 is extended by any significant degree.

It will be appreciated that the invention may be applied to other configurations of electrical braking system. For example, each modulator may be connected to a single brake actuator, or to all the brake actuators acting on the wheels on one axle of the tractor or trailer. Advantageously, as is conventional in most, if not all, vehicles fitted with EBS, the ECUs are each connected to at least one wheel speed sensor and are also provide anti-lock braking control, i.e. to provide ABS functionality.

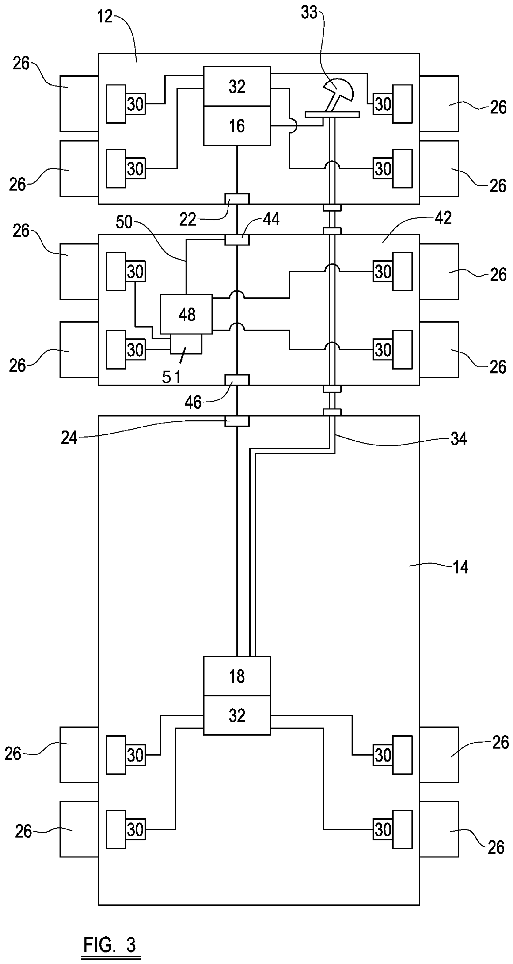

The system may also be used for tractor and full trailer or tractor and semi-trailer combinations. Where used for a tractor and semi-trailer combination, if the tractor is not configured correctly to support a semi-trailer, a dolly may be provided between the tractor and the semi-trailer - the dolly supporting the semi-trailer and being towed by the tractor. In this case, the system may be configured according to the invention as shown in Figure 3.

Referring now to Figure 3 there is shown a tractor 12, a semi-trailer 14 and a dolly 42. As with the tractor-full trailer system described above, the tractor 12 and semi-trailer 14 are each provided with an electrical braking control unit 16, 18, a modulator 32 and a brake 28, and brake actuator 30 associated with each wheel 26. A brake pedal 33 positioned in a drivers cab of the tractor 12 is connected to the tractor electronic braking control unit 16, and operable to generate and transmit to the tractor electronic braking control unit 18 an electrical braking demand signal which is used to generate a braking signal which is transmitted to the modulator 32.

As before, the tractor electrical braking control unit 16 is connected to the trailer electrical braking control unit 18 using a CAN bus, so that the electrical braking demand signal can be transmitted to the trailer electrical braking control unit. In order to facilitate this connection there is an ISO 7638 compliant connector 22 provided at the rear of the tractor 12, a CAN repeater 44 at the front of the dolly 42, a further ISO 7638 compliant connector 46 at the rear of the dolly 42 and a further ISO 7638 compliant connector 24 provided at the front of the semi-trailer 14. A CAN bus 20 extends from the tractor mounted connector 22 to the CAN repeater 44, on to the rear dolly-mounted connector 46, the trailer-mounted connector 24, and finally the trailer electrical control unit 18. In contrast to the system shown in Figure 2, therefore, it will be appreciated that the CAN repeater is mounted on the dolly 42, rather than on the semi-trailer 14.

In this example, a pneumatic line 34 extends from the brake pedal 33 to the trailer ECU 18 via the dolly 42, and provides means of communicating a pneumatic braking demand signal to the trailer ECU 18 as a back-up to the electrical braking demand signal as discussed above.

The dolly 42 is also provided with an electrical braking control unit 48 and modulator 51, which may control the operation of the brake actuators 30 at each wheel 26 of the dolly 42. The dolly electrical braking control unit 48 is also connected to the CAN repeater 44 via a further CAN bus 50. The CAN bus 20 connecting the CAN repeater 44 to the connector 46 at the rear of the dolly is connected to a first port of the CAN repeater 44, and the CAN bus 50 connecting the CAN repeater 44 to the dolly ECU 48 is connected to a second port of the CAN repeater 44. By virtue of this arrangement, only a single electrical connection between the tractor 12 and the dolly 42 is required in order to supply electrical power, and perhaps also an electrical braking demand signal to the dolly ECU 48.

The second port of the CAN repeater 44 may provide a five pin connection to the dolly electrical braking control unit 48, the five pin connection being used to provide electrical power to the dolly electrical braking control unit 48, and, if desired, ignition on/off and cab-mounted warning lamp signals. In this case, the dolly ECU 48 can provide ABS functionality only and cannot provide a full EBS. The second port of the CAN repeater may, alternatively provide an ISO7638 standard seven pin connection, in which case, the dolly electrical braking control unit 48 may also be supplied with the electrical braking demand signal via this connection, and can function as an EBS unit.

Where the five pin port is used, if the dolly is to be provided with EBS it is necessary for the dolly to receive the pneumatic braking demand signal from the pneumatic line 34, and the dolly ECU 48 to be provided with a pressure transducer to convert the pneumatic signal to an electrical braking demand signal for processing by the ECU 48.

In the Figure 3 arrangement, the semi-trailer 14 could also be provided with a CAN repeater, and a headboard pressure sensor as described in relation to Figure 2 above.

Whilst the connectors described above are ISO7638 compliant, it should be appreciated that this is not essential to the invention, and any other type of connector capable of relaying the required signals may be used.

When used in this specification and claims, the terms "comprises" and "comprising" and variations thereof mean that the specified features, steps or integers are included. The terms are not to be interpreted to exclude the presence of other features, steps or components.

## Claims

1. An articulated vehicle comprising a tractor (12), a first trailer (42) and a second (14) trailer, wherein the tractor (12) is provided with a braking demand signal generating device (33) which is operable by a driver of the vehicle (10) to generate an electrical braking demand signal, and each trailer (14, 42) is provided with an electrical braking control unit (18, 48), wherein the first trailer (42) is provided with an electrical connector (44), and means are provided to transmit the electrical braking demand signal from the tractor (12) to the electrical connector (44), the electrical braking unit (18) of the second trailer (14) being connected to the electrical connector (44) so that the electrical braking demand signal may be transmitted from the electrical connector (44) to the electrical braking control unit (18) of the second trailer (14), wherein the electrical braking control unit (48) of the first trailer (42) is also connected to the electrical connector (44), power being supplied to the electrical braking control unit (48) of the first trailer (42) via the connection to the electrical connector (44), **characterised in that** the electrical connector (44) includes a repeater which retransmits any signal received.

2. An articulated vehicle according to claim 1 wherein the first trailer (42) is a dolly and the second trailer (14) is a semi-trailer.

3. An articulated vehicle according to claim 1 or 2 wherein the electrical connector (44) is connected to each of the electrical braking control units (48, 18) by means of a bus.

## Patentansprüche

1. Gelenkfahrzeug, das eine Zugmaschine (12), einen ersten Anhänger (42) und einen zweiten Anhänger (14) umfasst, wobei die Zugmaschine (12) mit einer Vorrichtung (33) zum Generieren eines Bremsanforderungssignals versehen ist, die von einem Fahrer des Fahrzeugs (10) bedienbar ist, um ein elektrisches Bremsanforderungssignal zu generieren, und jeder Anhänger (14, 42) mit einer elektrischen Bremssteuereinheit (18, 48) versehen ist, wobei der erste Anhänger (42) mit einem elektrischen Verbinder (44) versehen ist, und Mittel bereitgestellt sind, um das elektrische Bremsanforderungssignal von der Zugmaschine (12) zum elektrischen Verbinder (44) zu übertragen, wobei die elektrische Bremseinheit (18) des zweiten Anhängers (14) mit dem elektrischen Verbinder (44) verbunden ist, sodass das elektrische Bremsanforderungssignal vom elektrischen Verbinder (44) zur elektrischen Bremssteuereinheit (18) des zweiten Anhängers (14) übertragen werden kann, wobei die elektrische Bremssteuereinheit (48) des ersten Anhängers (42) außerdem mit dem elektrischen Verbinder (44) verbunden ist, Strom zur elektrischen Bremssteuereinheit (48) des ersten Anhängers (42) über die Verbindung zum elektrischen Verbinder (44) geliefert wird, **dadurch gekennzeichnet, dass** der elektrische Verbinder (44) einen Repeater einschließt, der irgendein Empfangssignal erneut überträgt.

2. Gelenkfahrzeug nach Anspruch 1, wobei der erste Anhänger (42) ein Nachläufer ist und der zweite Anhänger (14) ein Sattelanhänger ist.

3. Gelenkfahrzeug nach Anspruch 1 oder 2, wobei der elektrische Verbinder (44) mit jeder der elektrischen Bremssteuereinheiten (48, 18) mittels eines Busses verbunden ist.

## Revendications

1. Véhicule articulé comprenant un tracteur (12), une première remorque (42) et une deuxième remorque (14), dans lequel le tracteur (12) est muni d'un dispositif de génération de signal de demande de freinage (33) lequel peut être actionné par un conducteur du véhicule (10) pour générer un signal de demande de freinage électrique, et chaque remorque (14, 42) est munie d'une unité de commande de freinage électrique (18, 48), dans lequel la première remorque (42) est munie d'un connecteur électrique (44), et un moyen est fourni pour transmettre le signal de demande de freinage électrique depuis le tracteur (12) au connecteur électrique (44), l'unité de freinage électrique (18) de la deuxième remorque (14) étant connectée au connecteur électrique (44) de telle sorte que le signal de demande de freinage électrique peut être transmis du connecteur électrique (44) à l'unité de commande de freinage électrique (18) de la deuxième remorque (14), dans lequel l'unité de commande de freinage électrique (48) de la première remorque (42) est aussi connectée au connecteur électrique (44), l'alimentation électrique étant fournie à l'unité de commande de freinage électrique (48) de la première remorque (42) par la connexion au connecteur électrique (44), **caractérisé en ce que** le connecteur électrique (44) inclut un répéteur qui retransmet tout signal reçu.

2. Véhicule articulé selon la revendication 1, dans lequel la première remorque (42) est un chariot et la deuxième remorque (14) est une semi-remorque.

3. Véhicule articulé selon la revendication 1 ou 2, dans lequel le connecteur électrique (44) est connecté à chacune des unités de commande de freinage électrique (48, 18) au moyen d'un bus.
